# EUROPÄISCHE PATENTANMELDUNG

(11) **EP 4 785 766 A1**
(43) Veröffentlichungstag der Anmeldung: **05.08.2026**
(21) Anmeldenummer: 26155059.4
(22) Anmeldetag: 29.01.2026
(51) Int. Cl.: A01B 35/24, A01B 61/04

(54) **ZINKENANORDNUNG EINES BODENBEARBEITUNGSGERÄTES UND BODENBEARBEITUNGSGERÄT**

(30) Priorität: 04.02.2025 DE 102025104028
(71) Anmelder: Landmaschinenfabrik Köckerling GmbH & Co. KG, 33415 Verl (DE)
(72) Erfinder: Krawinkel, Jan, 33100 Paderbom (DE); Lamprecht, Jonas, 33100 Paderbom (DE); Stratmann, Matthias, 59229 Ahlen-Dolberg (DE); Kattenstroth, Ralf, 33334 Gütersloh (DE)
(74) Vertreter: Hoefer & Partner Patentanwälte mbB

(57) **Zusammenfassung**

Die Erfindung betrifft eine Zinkenanordnung (1) eines Bodenbearbeitungsgerätes (200), umfassend: einen Zinkenstiel (3), ausgebildet als gebogene Blattfeder, wobei ein oberes Zinkenstielende (31) zur Befestigung an einem Rahmen (201) des Bodenbearbeitungsgerätes (200) ausgebildet ist, ein Schar (4) an einem unteren Zinkenstielende (32), wobei das Schar (4) durch den Boden in einer Zugrichtung (2) ziehbar ist, wobei der Zinkenstiel (3) einen S-förmigen Abschnitt aufweist, der einen oberen Bogen (33) und einen unteren Bogen (34) bildet, wobei die konvexe Seite des oberen Bogens (33) und die konkave Seite des unteren Bogens (34) in Zugrichtung (2) zeigen, eine Zusatzfeder (5), ausgebildet als gebogene Blattfeder, wobei sich die Zusatzfeder (5) von einem oberen Zusatzfederende (51) bis zu einem unteren Zusatzfederende (52) erstreckt und an der konkaven Seite des oberen Bogens (33) parallel zumindest zu einem Abschnitt des oberen Bogens (33) verläuft, wobei die Zusatzfeder (5), insbesondere das untere Zusatzfederende (51), über eine Rückprallsicherungsanordnung (6) mit dem Zinkenstiel (3) gekoppelt ist.

## Beschreibung

### Beschreibung

Die Erfindung betrifft eine Zinkenanordnung eines Bodenbearbeitungsgerätes. Ferner zeigt die Erfindung das Bodenbearbeitungsgerät mit der Zinkenanordnung. Bei dem Bodenbearbeitungsgerät handelt es sich beispielsweise um einen Grubber.

Grubber nach dem Stand der Technik umfassen einen oder mehrere Zinkenstiele, wobei sich an jedem Zinkenstiel ein Schar befindet. Bei der Benutzung wird der Grubber mit einer Zugmaschine durch den Boden gezogen, um diesen zu lockern. An dem Zinkenstiel des Grubbers kann ein Leitelement, beispielsweise ein Leitblech, angeordnet sein. Eine solche Anordnung zeigt zum Beispiel DE 10 2009 058 412 A1.

Es ist Aufgabe der Erfindung eine Zinkenanordnung eines Bodenbearbeitungsgerätes anzugeben, die eine möglichst betriebsfeste, effiziente und wartungsarme Bearbeitung der Böden ermöglicht.

Die Lösung dieser Aufgabe erfolgt durch die Merkmale des unabhängigen Anspruchs. Die abhängigen Ansprüche haben bevorzugte Weitergestaltungen der Erfindung zum Gegenstand.

So zeigt die Erfindung eine Zinkenanordnung eines Bodenbearbeitungsgerätes. Bei dem Bodenbearbeitungsgerät handelt es sich insbesondere um einen Grubber.

Die einzelne Zinkenanordnung umfasst einen Zinkenstiel und eine Zusatzfeder.

Im Folgenden werden Angaben wie "oben" und "unten" sowie "vorne" und "hinten" verwendet. Diese Angaben beziehen sich auf die Verwendung der Zinkenanordnung in Verbindung mit dem Bodenbearbeitungsgerät, wobei zu berücksichtigen ist, dass ein solches Bodenbearbeitungsgerät so verwendet wird, dass die Zugrichtung bzw. Fahrtrichtung vorne liegt und die untere Seite dem Boden zugewandt ist bzw. sich im Boden befindet.

Der Zinkenstiel ist als Blattfeder ausgebildet. Der Zinkenstiel weist ein oberes Zinkenstielende auf. Dieses ist zur Befestigung an einem Rahmen des Bodenbearbeitungsgerätes ausgebildet. Insbesondere ist das obere Zinkenstielende am Rahmen des Bodenbearbeitungsgerätes anschraubbar. Der Rahmen erstreckt sich insbesondere horizontal und bezüglich der Zugrichtung des Bodenbearbeitungsgerätes in Querrichtung.

Die Zinkenanordnung umfasst ein Schar am unteren Zinkenstielende. Das Schar kann integraler Bestandteil des Zinkenstiels sein. Vorzugsweise handelt sich aber um ein Schar, das auswechselbar im unteren Zinkenstielende befestigt, insbesondere angeschraubt, ist. Insbesondere ist vorgesehen, dass die Zinkenanordnung ein Gänsefußschar aufweist, wobei auch ein andersartiges Schar verwendet werden kann. Aus der Gestaltung des Zinkenstiels und des Schars ergibt sich die Zugrichtung der Zinkenanordnung und somit auch die Zugrichtung des Bodenbearbeitungsgerätes. Dementsprechend ist das Schar durch den Boden in dieser Zugrichtung ziehbar.

Der Zinkenstiel der erfindungsgemäßen Zinkenanordnung ist als Blattfeder ausgebildet, sodass das Schar beispielsweise bei einem Kontakt mit einem großen Stein entgegen der Zugrichtung nach hinten elastisch ausweichen kann. Die Zusatzfeder ist dazu angeordnet und ausgebildet, die Federkraft des als Blattfeder ausgebildeten Zinkenstiels zu erhöhen, insbesondere bei einer Bewegung des Zinkenstiels entgegen der Zugrichtung.

Beim Zurückfedern, also bei der Bewegung des Zinkenstiels und der Zusatzfeder in Zugrichtung, soll vermieden werden, dass der Zinkenstiel zu weit nach vorne federt und dabei zu weit von der Zusatzfeder abhebt. Hierzu ist eine Rückprallsicherungsanordnung vorgesehen.

Der Zinkenstiel weist einen S-förmigen Abschnitt auf, der einen oberen Bogen und einen unteren Bogen bildet. Der untere Bogen endet mit dem unteren Zinkenstielende, sodass das Schar am unteren Bogen ausgebildet oder befestigt ist. Die konvexe Seite des oberen Bogens und die konkave Seite des unteren Bogens zeigen in Zugrichtung. Durch die S-förmige Ausgestaltung des Zinkenstiels weist der Zinkenstiel einen Übergang vom oberen Bogen in den unteren Bogen auf. Die konkave Seite des oberen Bogens und die konvexe Seite des unteren Bogens zeigen entgegen der Zugrichtung; diese Seite des Zinkenstiels wird als Rückseite bezeichnet.

Die Zusatzfeder ist ebenfalls als gebogene Blattfeder ausgebildet. Die Zusatzfeder erstreckt sich von einem oberen Zusatzfederende bis zu einem unteren Zusatzfederende. Dabei verläuft die Zusatzfeder an der konkaven Seite des oberen Bogens parallel zumindest zu einem Abschnitt des oberen Bogens. Vorzugsweise sind das obere Zinkenstielende und das obere Zusatzfederende zur gemeinsamen Befestigung am Rahmen des Bodenbearbeitungsgerätes ausgebildet.

Der Verlauf der Zusatzfeder "parallel" zum oberen Bogen bedeutet, dass in diesem Bereich die Zusatzfeder und der Zinkenstiel annähernd mit demselben Radius gebogen sind und aneinander liegend oder mit geringem Abstand zueinander verlaufen, sodass bei einer Bewegung des Schars entgegen der Zugrichtung sowohl der Zinkenstiel als auch die Zusatzfeder elastisch verformt wird. Insbesondere ist hierzu vorgesehen, dass die Zusatzfeder an der konkaven Seite des oberen Bogens parallel zum gesamten oberen Bogen verläuft.

Der Zinkenstiel ist vorzugsweise einteilig ausgebildet. Die Zusatzfeder ist vorzugsweise einteilig ausgebildet.

Die Rückprallsicherungsanordnung befindet sich am unteren Zusatzfederende und koppelt die Zusatzfeder mit dem Zinkenstiel. Das untere Zusatzfederende ist insbesondere als Bereich zu verstehen und die Rückprallsicherungsanordnung muss sich nicht am absoluten Ende der Zusatzfeder befinden. Insbesondere ist die Rückprallsicherungsanordnung derart ausgebildet, dass eine Bewegung des Zinkenstiels relativ zur Zusatzfeder in einem begrenzten Umfang ermöglicht wird.

Insbesondere sind Zusatzfeder und Zinkenstiel derart ausgebildet und angeordnet, sodass bei einer Bewegung des Zinkenstiels entgegen der Zugrichtung der Zinkenstiel an der Zusatzfeder anliegt und bei einer Bewegung des Zinkenstiels in Zugrichtung die Rückprallsicherungsanordnung ein Abheben des Zinkenstiels von der Zusatzfeder im begrenzten Umfang ermöglicht und begrenzt.

Bei Verwendung der Zinkenanordnung steigt Gutsstrom aus Boden- und/oder Pflanzenmaterial entlang der konkaven Vorderseite des Zinkenstiels (also entlang des unteren Bogens) nach oben. Ohne spezielle Maßnahmen, würde der aufsteigende Gutsstrom die Rückprallsicherungsanordnung zusetzen. Eben solche Maßnahmen werden im Folgenden beschrieben:
Bevorzugt ist vorgesehen, dass sich die Rückprallsicherungsanordnung an der Rückseite des Zinkenstiels befindet, sodass die Rückprallsicherungsanordnung durch den aufsteigenden Gutsstrom nicht zugesetzt wird. Deshalb ist bevorzugt vorgesehen, dass die Rückprallsicherungsanordnung ein "festes Element" umfasst, das fest am Zinkenstiel angeordnet ist und auf der Rückseite des Zinkenstiels an der Zusatzfeder angeordnet und relativ zur Zusatzfeder im begrenzten Umfang beweglich ist. Die feste Anordnung am Zinkenstiel bedeutet insbesondere, dass das feste Element relativ zum Zinkenstiel unbeweglich ist. Im Folgenden wird gezeigt, dass dieses "feste Element" insbesondere ein Bolzen, ein Vertikalelement, eine Klammer oder eine plastische Ausformung sein kann.

Gemäß einer ersten Variante umfasst die Rückprallsicherungsanordnung eine Bolzenanordnung. Die Bolzenanordnung erstreckt sich durch den Zinkenstiel und durch die Zusatzfeder. Insbesondere ist die Bolzenanordnung ausgebildet, eine Bewegung des Zinkenstiels relativ zur Zusatzfeder im begrenzten Umfang zu ermöglichen.

Vorzugsweise umfasst die Bolzenanordnung einen Bolzen als festes Element der Rückprallsicherungsanordnung. Vorzugsweise erstreckt sich der Bolzen durch ein Loch im Zinkenstiel und ein Loch, insbesondere ein Langloch, in der Zusatzfeder erstreckt. Der Bolzen weist vorzugsweise an einem Ende einen Kopf auf und am anderen Ende befindet sich eine Mutter der Bolzenanordnung oder ein ähnliches Element. Mittels einer Hülse der Bolzenanordnung, die auf dem Bolzen steckt, kann die Position der Mutter definiert werden. Bspw. durch diese Hülse ist es möglich, eine gewisse, jedoch begrenzte Beweglichkeit des Zinkenstiels relativ zur Zusatzfeder zu ermöglichen. Ferner kann die Bolzenanordnung eine Scheibe aufweisen, die bei der Relativbewegung zwischen Zinkenstiel und Zusatzfeder als Anschlag dient. Alternativ zur Scheibe kann auch die Mutter entsprechend groß ausgestaltet sein. Die Scheibe kann ein eigenständiges Bauteil sein, oder integraler Bestandteil der Mutter oder der Hülse sein.

In einer zweiten Variante ist anstatt der Bolzenanordnung vorgesehen, dass die Zusatzfeder zum unteren Zusatzfederende hin mit einem "Horizontalabschnitt" nicht parallel zum Zinkenstiel verläuft. Wie bereits beschrieben, verläuft die Zusatzfeder entlang des Bogens des Zinkenstiels zumindest teilweise parallel zum Bogen. In dieser Variante erstreckt sich die Zusatzfeder in etwa ab dem Übergang vom oberen Bogen zum unteren Bogen mit dem Horizontalabschnitt entgegen der Zugrichtung. Dieser Horizontalabschnitt erstreckt sich insbesondere mit +/- 30° zur Horizontalen. Der Horizontalabschnitt liegt insbesondere nicht an dem Zinkenstiel an. Die Rückprallsicherungsanordnung umfasst hierbei ein Vertikalelement als festes Element der Rückprallsicherungsanordnung, das bspw. als langer Bolzen oder Zugstange ausgebildet ist. Die Oberseite der Vertikalelements ist mit dem unteren Zusatzfederende verbunden, also mit dem nach hinten ragenden Horizontalabschnitt. Die Unterseite des Vertikalelements ist an der konvexen Seite des unteren Bogens des Zinkenstiels mit dem Zinkenstiel verbunden. Das Vertikalelement erstreckt sich vorzugsweise mit +/- 30° zur Vertikalen.

Vorzugsweise ist vorgesehen, dass das Vertikalelement eine Bewegung des Zinkenstiels relativ zur Zusatzfeder in einem begrenzten Umfang ermöglicht. Hierzu ist insbesondere vorgesehen, dass das Vertikalelement linear beweglich, jedoch über einen Anschlag begrenzt in dem unteren Zusatzfederende steckt.

Für die Verbindung zwischen Vertikalelement und Zinkenstiel sind insbesondere zwei Optionen vorgesehen: Gemäß der ersten Option ist bevorzugt vorgesehen, dass das Vertikalelement mit dem Zinkenstiel verschraubt ist. Diese Verschraubung befindet sich insbesondere an der hinteren Seite des unteren Bogens, also an der konvexen Seite des unteren Bogens. Besonders bevorzugt ist das Schar mittels einer Scharverschraubung mit dem Zinkenstiel verbunden. Diese Scharverschraubung wird vorzugsweise auch dazu genutzt, das Vertikalelement mit dem Zinkenstiel zu verbinden.

Gemäß der zweiten Option ist bevorzugt vorgesehen, dass das Vertikalelement an einem plastisch verformten Bereich des Zinkenstiels kraftschlüssig und/oder formschlüssig mit dem Zinkenstiel verbunden ist, wobei die Verbindung insbesondere durch die plastische Verformung gebildet ist. Die plastische Verformung und somit die Verbindung zwischen Zinkenstiel und Vertikalelement befindet sich vorzugsweise an der Rückseite des unteren Bogens, also an der konvexen Seite des unteren Bogens. Das Bilden der Verbindung durch die plastische Verformung bedeutet insbesondere, dass durch und während der plastischen Verformung des Zinkenstiels das Vertikalelement vom Material des Zinkenstiels umschlossen wird. Alternativ hierzu ist es auch möglich, zunächst die plastische Verformung am Zinkenstiel auszubilden und so dann das Vertikalelement in den plastisch verformten Bereich einzusetzen, insbesondere einzuschrauben.

Gemäß einer dritten Variante umfasst die Rückprallsicherungsanordnung eine Klammer als festes Element der Rückprallsicherungsanordnung, die den Zinkenstiel und die Zusatzfeder miteinander verbindet. Die Klammer ist insbesondere aus Metall gefertigt und umgreift den Zinkenstiel und die Zusatzfeder. Dabei ist die Klammer fest mit dem Zinkenstiel verbunden. Vorzugsweise ist vorgesehen, dass die Klammer eine Bewegung des Zinkenstiels relativ zur Zusatzfeder im begrenzten Umfang ermöglicht.

Vorzugsweise umfasst die Klammer eine Klammerbasis, an deren Enden sich zwei gegenüberliegende Klammerschenkel erstrecken. Die Klammerschenkel enden jeweils mit einem Klammerfortsatz. Die Zusatzfeder und der Zinkenstiel sind vorzugsweise zwischen den beiden Klammerschenkeln angeordnet; dabei befinden sich die Zusatzfeder und der Zinkenstiel zwischen der Klammerbasis und den beiden Klammerfortsätzen.

Bei Verwendung der Klammer ist vorzugsweise vorgesehen, dass die Klammerbasis an der Zusatzfeder angeordnet ist und sich die beiden Klammerfortsätze am Zinkenstiel befinden. Hierzu ist besonders bevorzugt vorgesehen, dass der Zinkenstiel an seiner in Zugrichtung zeigenden Seite für jeden Klammerfortsatz eine Aussparung, bspw. eine Kerbe, aufweist. Dabei können die Klammerfortsätze in diesen Aussparungen eingehakt sein.

Alternativ befindet sich die Basis am Zinkenstiel und die beiden Klammerfortsätze an der Zusatzfeder. So dann ist bevorzugt vorgesehen, dass die Zusatzfeder an ihrer entgegen der Zugrichtung zeigenden Seite die Aussparungen zum Einhaken der Klammerfortsätze aufweist.

Gemäß einer vierten Variante umfasst die Rückprallsicherungsanordnung zumindest eine plastische Ausformung aus dem Material des Zinkenstiels, wobei die plastische Ausformung als festes Element der Rückprallsicherungsanordnung die Zusatzfeder hintergreift. Besonders bevorzugt ist dabei vorgesehen, dass beidseitig am Zinkenstiel jeweils eine plastische Ausformung vorgesehen ist. Die beiden plastischen Ausformungen erstrecken sich parallel und die Zusatzfeder befindet sich zwischen den beiden plastischen Ausformungen.

Die jeweilige plastische Ausformung setzt sich bevorzugt zusammen aus einem Ausformungsschenkel, der in einem Ausformungsfortsatz endet. Die Zusatzfeder liegt insbesondere zwischen den beiden Ausformungsschenkeln und die beiden Ausformungsfortsätze hintergreifen die Zusatzfeder. Vorzugsweise ist vorgesehen, dass die zumindest eine plastische Ausformung derart ausgebildet ist, um eine Bewegung des Zinkenstiels relativ zur Zusatzfeder in einem begrenzten Umfang zu ermöglichen.

Gemäß einer weiteren Variante umfasst die Rückprallsicherungsanordnung ein Fangelement am unteren Zusatzfederende. Dieses Fangelement ist insbesondere fest mit dem unteren Zusatzfederende verbunden. Das Fangelement umgreift den Zinkenstiel zumindest teilweise. Insbesondere umgreift das Fangelement den Zinkenstiel vollständig, sodass das Fangelement auch als Fangöse oder Fangring bezeichnet werden kann. Das Fangelement umgreift den Zinkenstiel insbesondere derart, dass der Zinkenstiel das Fangelement im Ruhezustand der Zinkenanordnung nicht berührt. Erst bei einem Zurückfedern des Zinkenstiels kann der Zinkenstiel am Fangelement anschlagen, sodass die Bewegung des Zinkenstiels relativ zur Zusatzfeder begrenzt werden kann.

Sofern die Rückprallsicherungsanordnung die Bolzenanordnung, die Klammer, die plastische Ausformung oder das Fangelement umfasst, ist bevorzugt vorgesehen, dass die Rückprallsicherungsanordnung, also die Bolzenanordnung, die Klammer, die plastische Ausformung oder das Fangelement angeordnet ist am: oberen Bogen des Zinkenstiels, oder am Übergang des oberen Bogens zum unteren Bogen des Zinkenstiels oder am unteren Bogen des Zinkenstiels. Sofern sich die Rückprallsicherungsanordnung am unteren Bogen des Zinkenstiels befindet, ist bevorzugt vorgesehen, dass die Zusatzfeder nicht nur parallel zum oberen Bogen, sondern auch zu einem Teil des unteren Bogens verläuft.

Des Weiteren ist bevorzugt vorgesehen, dass der untere Bogen des Zinkenstiels eine in Zugrichtung hervorstehende Wölbung aufweist. Diese Wölbung befindet sich somit an der konkaven Seite des unteren Bogens. Die Rückprallsicherungsanordnung ist bevorzugt höher angeordnet als die Wölbung. Insbesondere ist die Wölbung ausgebildet und angeordnet, einen Gutsstrom aus Boden- und/oder Pflanzenmaterial an der Rückprallsicherungsanordnung vorbeizuleiten. Die Wölbung ist insbesondere integraler Bestandteil des Zinkenstiels. Der Zinkenstiel ist somit vorzugsweise inklusive der Wölbung einteilig.

Der beschriebene Gutsstrom, welcher durch die Wölbung an der Rückprallsicherungsanordnung vorbeigeleitet wird, entsteht beim Ziehen des Schars durch den Boden. Der Gutsstrom steigt dabei entlang der konkaven Seite des unteren Bogens nach oben und wird von der Wölbung abgeleitet. Dadurch wir vermieden, dass der aufsteigende Gutsstrom die Rückprallsicherungsanordnung zusetzt.

Die Wölbung ist insbesondere zu verwenden, wenn die Rückprallsicherungsanordnung die Bolzenanordnung, die Klammer, die plastische Ausformung oder das Fangelement umfasst.

Die Erfindung zeigt ferner ein Bodenbearbeitungsgerät. Das Bodenbearbeitungsgerät umfasst den bereits erwähnten Rahmen und mehrere am Rahmen befestigte Zinkenanordnungen, wie sie vorab beschrieben wurden. Das Bodenbearbeitungsgerät weist eine Zugvorrichtung auf, die am Rahmen angeordnet ist und die es ermöglicht, das Bodenbearbeitungsgerät mittels einer Zugmaschine in Zugrichtung zu ziehen. Die Zugrichtung des Bodenbearbeitungsgerätes entspricht der Fahrtrichtung der Zugmaschine.

Die im Rahmen der Zinkenanordnung beschriebenen vorteilhaften Ausgestaltungen und die zugehörigen Unteransprüche finden entsprechend vorteilhafte Anwendung für das erfindungsgemäße Bodenbearbeitungsgerät.

Weitere Einzelheiten, Vorteile und Merkmale der vorliegenden Erfindung ergeben sich aus nachfolgender Beschreibung eines Ausführungsbeispiels anhand der Zeichnungen. Es zeigt:
- Figuren 1 bis 3: eine erfindungsgemäße Zinkenanordnung mit einer Bolzenanordnung als Rückprallsicherungsanordnung,
- Figuren 4 bis 6: die erfindungsgemäße Zinkenanordnung mit der Bolzenanordnung als Rückprallsicherungsanordnung,
- Figuren 7 bis 9: die erfindungsgemäße Zinkenanordnung mit der Bolzenanordnung als Rückprallsicherungsanordnung,
- Figuren 10 und 11: die erfindungsgemäße Zinkenanordnung mit einem Vertikalelement als Rückprallsicherungsanordnung,
- Figuren 12 bis 14: die erfindungsgemäße Zinkenanordnung mit dem Vertikalelement als Rückprallsicherungsanordnung,
- Figuren 15 bis 17: die erfindungsgemäße Zinkenanordnung mit einer Klammer als Rückprallsicherungsanordnung,
- Figuren 18 bis 20: die erfindungsgemäße Zinkenanordnung mit plastischen Verformungen als Rückprallsicherungsanordnung,
- Figuren 21 und 22: die erfindungsgemäße Zinkenanordnung mit Wölbung und einem Fangelement als Rückprallsicherungsanordnung, und
- Figur 23: ein erfindungsgemäßes Bodenbearbeitungsgerät mit erfindungsgemäßer Zinkenanordnung.

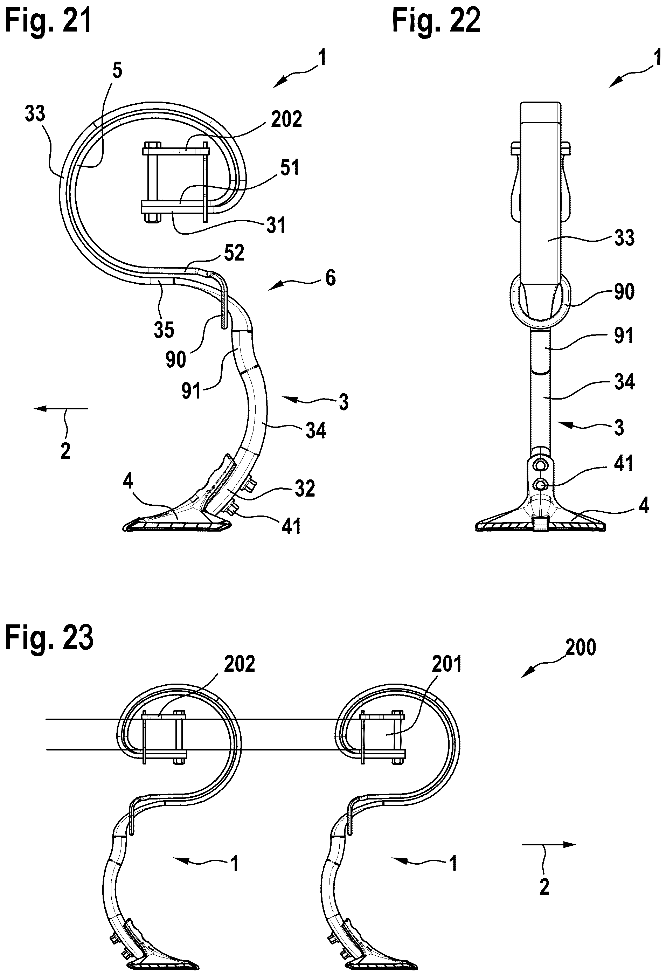

Im Folgenden werden anhand der Figuren unterschiedliche Ausführungsbeispiele einer erfindungsgemäßen Zinkenanordnung 1 beschrieben. Die Zinkenanordnung 1 wird an einem Bodenbearbeitungsgerät 200 verwendet. Figur 23 zeigt beispielhaft einen Ausschnitt des Bodenbearbeitungsgerätes 200 mit einer bestimmten Zinkenanordnung 1. Allerdings kann an dem Bodenbearbeitungsgerät 200 jede beliebige, hier vorgestellte Zinkenanordnung 1 verwendet werden.

Die Zinkenanordnung 1 eines jeden Ausführungsbeispiels ist wie folgt ausgebildet:
Die Zinkenanordnung 1 weist einen Zinkenstiel 3, ausgebildet als gebogene Blattfeder auf. Ein oberes Zinkenstielende 31 des Zinkenstiels 3 ist zur Befestigung an einem Rahmen 201 des Bodenbearbeitungsgerätes 200 ausgebildet. Hierzu ist eine Befestigungsanordnung 202 vorgesehen.

Ferner umfasst die Zinkenanordnung 1 ein Schar 4 an einem unteren Zinkenstielende 32 des Zinkenstiels 3, wobei das Schar 4 durch den Boden in einer Zugrichtung 2 ziehbar ist. Das Schar 4 ist mittels einer Scharverschraubung 41 am unteren Zinkenstielende 32 befestigt.

Der Zinkenstiel 3 weist einen S-förmigen Abschnitt auf, der einen oberen Bogen 33 und einen unteren Bogen 34 bildet. Der obere Bogen 33 geht mit einem Übergang 35 in den unteren Bogen 34 über.

Die Zinkenanordnung 1 umfasst eine Zusatzfeder 5, ausgebildet als gebogene Blattfeder, wobei sich die Zusatzfeder 5 von einem oberen Zusatzfederende 51 bis zu einem unteren Zusatzfederende 52 erstreckt und an der konkaven Seite des oberen Bogens 33 parallel zumindest zu einem Abschnitt des oberen Bogens 33 verläuft. Das obere Zusatzfederende 51 ist zusammen mit dem oberen Zinkenstielende 31 mittels der Befestigungsanordnung 202 am Rahmen 201 des Bodenbearbeitungsgerätes 200 befestigt.

Das untere Zusatzfederende 51 ist über eine Rückprallsicherungsanordnung 6 mit dem Zinkenstiel 3 gekoppelt.

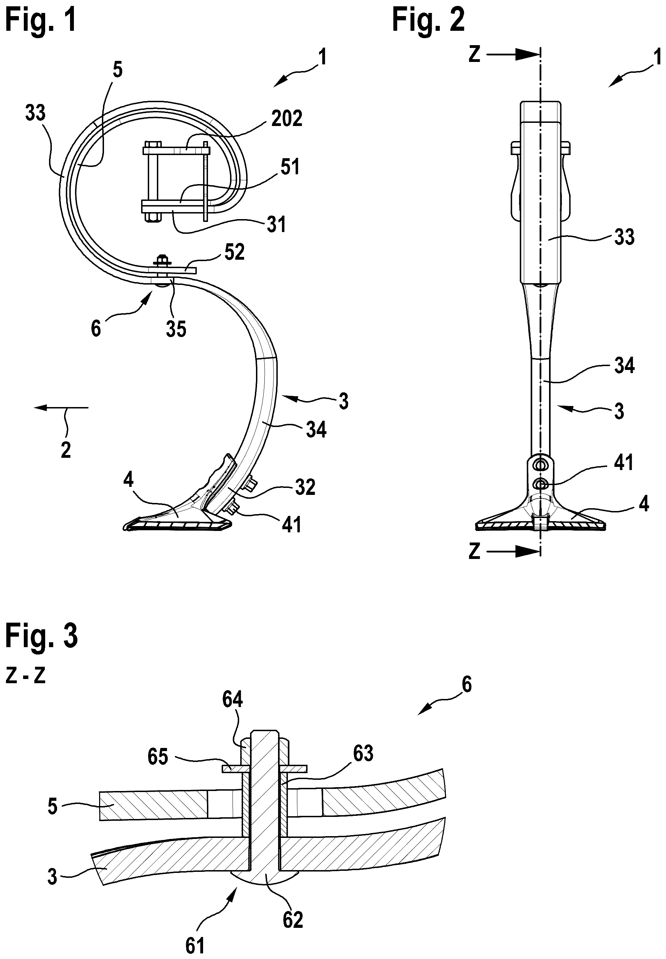

Figuren 1 bis 9 zeigen die Verwendung einer Bolzenanordnung 61 als Rückprallsicherungsanordnung 6. Figur 1 zeigt eine Seitenansicht der Zinkenanordnung 1. Figur 2 zeigt eine Vorderansicht der Zinkenanordnung 1. In Figur 3 ist der in Figur 2 gekennzeichnete Schnitt Z-Z dargestellt.

Wie insbesondere Figur 3 verdeutlicht, umfasst die Bolzenanordnung 61 einen Bolzen 62, eine Hülse 63, eine Mutter 64 und eine Scheibe 65. Der Bolzen 62 erstreckt sich durch entsprechende Löcher im Zinkenstiel 3 und in der Zusatzfeder 5; in der Zusatzfeder 5 ist hierzu eine Langloch vorgesehen. An einem Bolzenende befindet sich ein Kopf, der am Zinkenstiel 3 anliegt. Am gegenüberliegenden Ende des Bolzens 62 befindet sich die Mutter 64. Mittels der Hülse 63 ist die Mutter 64 entsprechend positioniert, sodass eine Relativbewegung zwischen Zinkenstiel 3 und Zusatzfeder 5 möglich ist. Diese Bewegung wird begrenzt durch die Scheibe 65. Die Scheibe 65 kann ein eigenständiges Bauteil sein, oder integraler Bestandteil der Mutter 64 oder der Hülse 63 sein.

Gemäß Figuren 1 bis 3 befindet sich die als Bolzenanordnung 61 ausgebildete Rückprallsicherungsanordnung 6 am Übergang 35 vom oberen Bogen 33 zum unteren Bogen 34. Alternativ hierzu kann sich die Rückprallsicherungsanordnung 6 auch am unteren Ende des oberen Bogens 33 befinden.

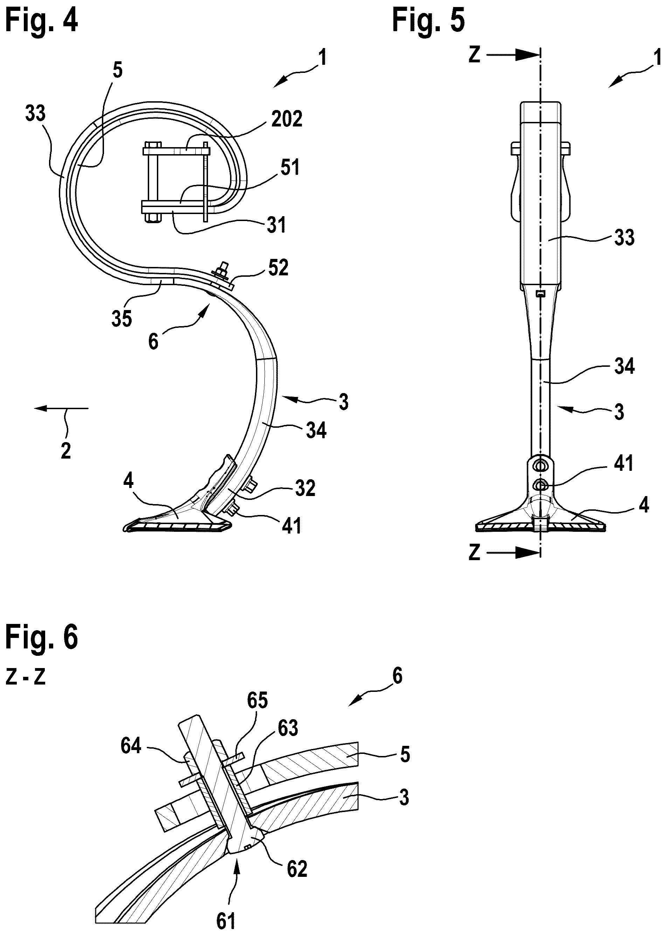

Figuren 4 bis 6 verdeutlichen, dass die Rückprallsicherungsanordnung 6, ebenfalls ausgebildet als Bolzenanordnung 61, auch kurz nach dem Übergang 35 im oberen Bereich des unteren Bogens 34 angeordnet werden kann.

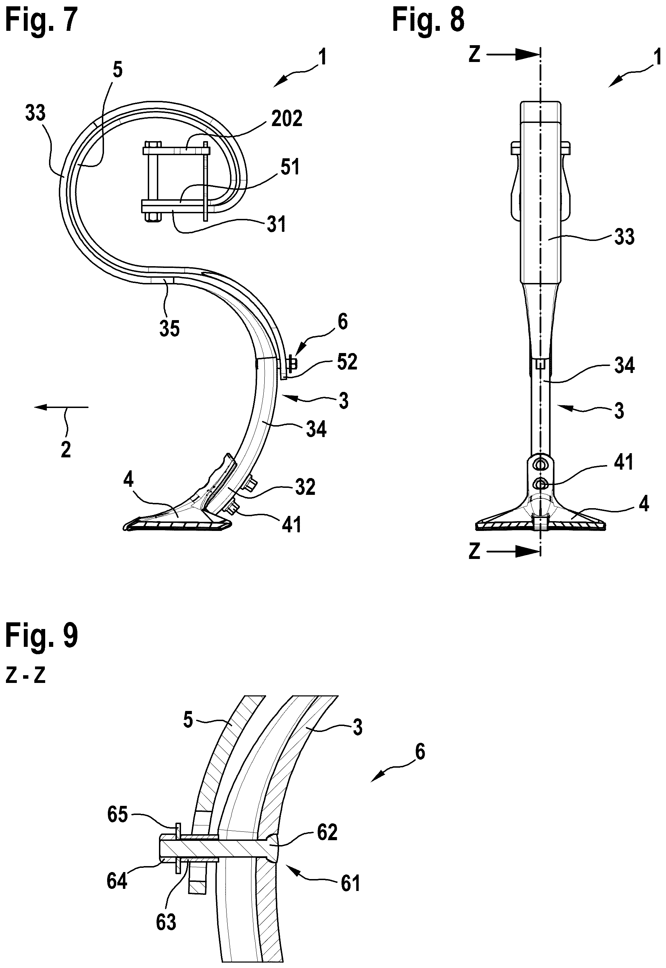

Figuren 7 bis 9 verdeutlichen, dass die als Bolzenanordnung 61 ausgebildete Rückprallsicherungsanordnung 6 auch in etwa mittig am unteren Bogen 34 angeordnet werden kann. Hierbei ist der Bolzen 62 der Bolzenanordnung 61 annähernd horizontal ausgerichtet. Insbesondere bei dieser Ausgestaltung erstreckt sich die Zusatzfeder nicht nur parallel zum oberen Bogen 33, sondern auch teilweise zum unteren Bogen 34.

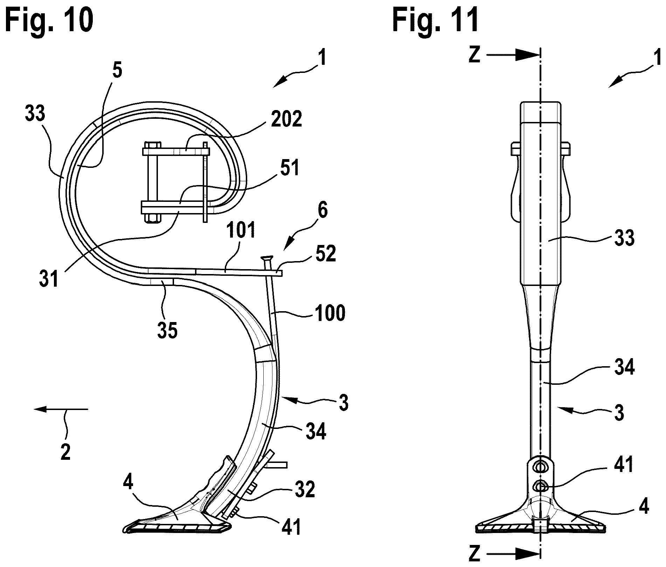

Figuren 10 bis 14 verdeutlichen die Ausgestaltung der Rückprallsicherungsanordnung 6 mit einem Vertikalelement 100. Hierbei erstreckt sich die Zusatzfeder 5 bis etwa zum Übergang 35 parallel zum oberen Bogen 33 des Zinkenstiels 3. Ab dem Übergang 35 verläuft die Zusatzfeder 5 mit einem Horizontalabschnitt 101 weiter, jedoch nicht mehr parallel zum Zinkenstiel 3. Dieser Horizontalabschnitt 101 steht insbesondere mit +/- 45° zur Horizontalen. Das Ende des Horizontalabschnitts 101 bildet das untere Zusatzfederende 52.

Das Vertikalelement 100 erstreckt sich, insbesondere mit +/- 30° zur Vertikalen, vom unteren Zusatzfederende 52 zur konvexen Seite des unteren Bogens 34. Das untere Ende des Vertikalelement 100 ist mit dem Zinkenstiel 3 verbunden. Das obere Ende des Vertikalelements 100 steckt linear beweglich im Horizontalabschnitt 101 und somit im unteren Zusatzfederende 52. Das obere Ende des Vertikalelements 100 ist mit einem entsprechenden Anschlag ausgebildet, um die Relativbewegung zwischen Zinkenstiel 3 und Zusatzfeder 5 zu begrenzen.

Figuren 10 und 11 zeigen, dass das untere Ende des Vertikalelements 100 an der Scharverschraubung 41 befestigt, bspw. eingehängt und geklemmt ist.

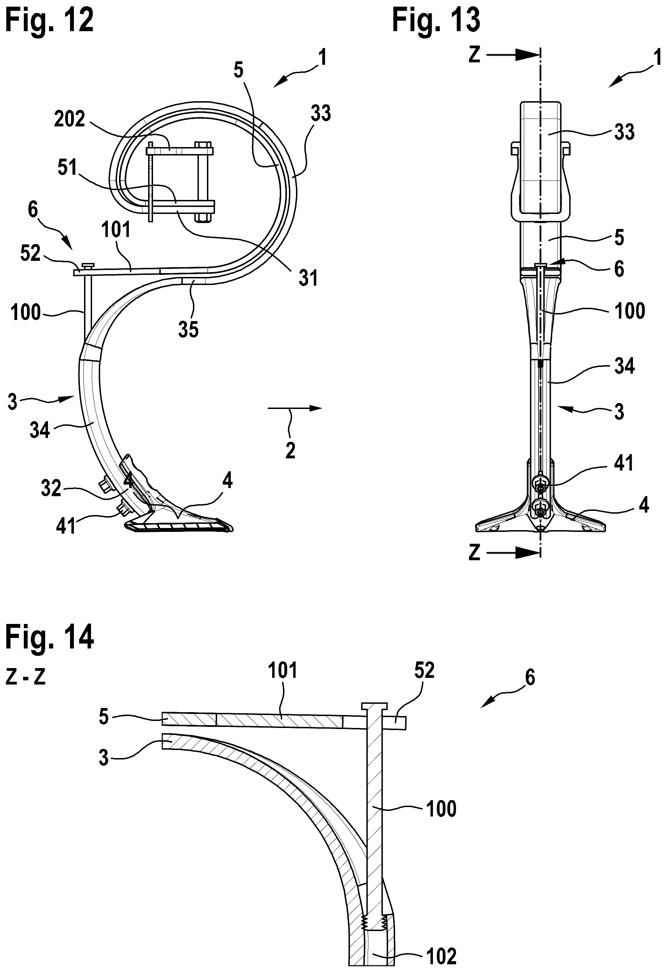

Figuren 12 bis 14 zeigen an der konvexen Seite des unteren Bogens 34 einen plastisch verformten Bereich 102 des Zinkenstiels 3. Mit Formen dieses plastisch verformten Bereichs 102 ist das untere Ende des Vertikalelements 100 kraft- und/oder formschlüssig aufgenommen.

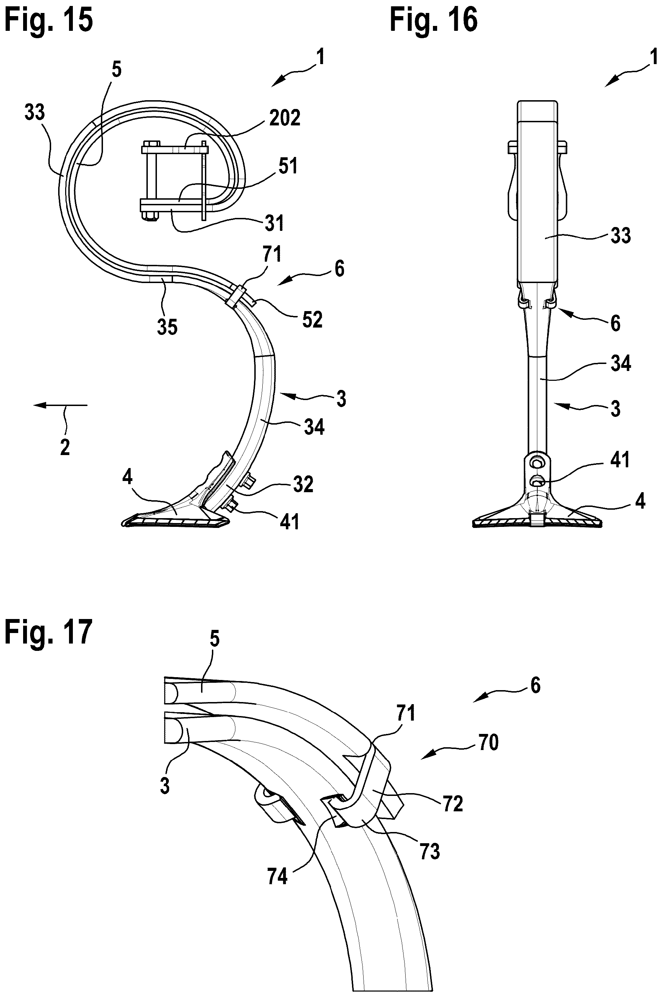

Figuren 15 bis 17 zeigen die Verwendung einer Klammer 70 als Rückprallsicherungsanordnung 6. Die Klammer 70, insbesondere aus Metall gefertigt, weist eine Klammerbasis 71 auf. Die Klammerbasis 71 befindet sich an der Zusatzfeder 5. Von der Klammerbasis 71 erstrecken sich zwei parallele Klammerschenkel 72, die mit Klammerfortsätzen 73 enden. Die Zusatzfeder 5 und der Zinkenstiel 3 befinden sich zwischen den beiden gegenüberliegenden Klammerschenkeln 72 sowie zwischen den beiden Klammerfortsätzen 73 und der Klammerbasis 71.

An der in Zugrichtung 2 zeigenden Seite des Zinkenstiels 3 befinden sich zwei Aussparungen 74 in die die beiden Klammerfortsätze 73 eingehakt sind.

Insbesondere die Detaildarstellung in Figur 17 verdeutlicht, dass im Ruhezustand das untere Zusatzfederende 52 vom Zinkenstiel 3 beabstandet ist, sodass die Klammer 70 eine begrenzte Relativbewegung zwischen Zusatzfeder 5 und Zinkenstiel 3 ermöglicht.

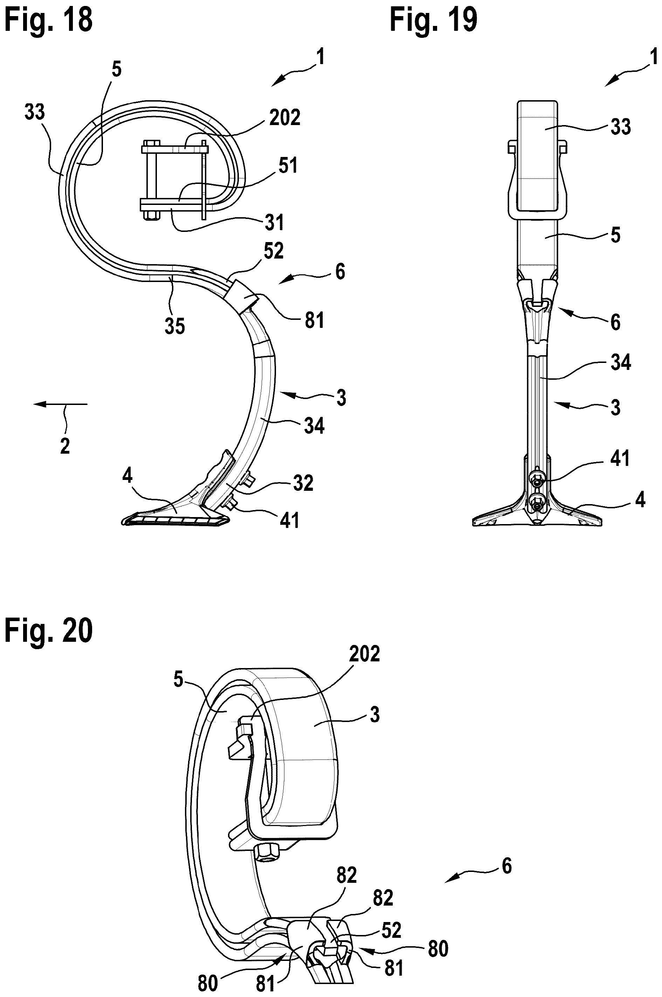

Figuren 18 bis 20 zeigen die Verwendung von zwei plastischen Ausformungen 80 als Rückprallsicherungsanordnung 6. Insbesondere die Detaildarstellung in Figur 20 verdeutlicht dabei, dass die beiden plastischen Ausformungen 80 aus dem Material des Zinkenstiels 3 geformt sind. Jede plastische Ausformung 80 weist dabei einen Ausformungsschenkel 81 auf, der in einen Ausformungsfortsatz 82 übergeht. Mit diesen beiden Ausformungsfortsätzen 82 umgreifen die beiden plastischen Ausformungen 80 die Zusatzfeder 5. Ähnlich wie bei der Klammer 70 ist auch hier zwischen unterem Zusatzfederende 52 und Zinkenstiel 3 ein Abstand vorgesehen, sodass die beiden plastischen Ausformungen 80 eine Relativbewegung zwischen Zusatzfeder 5 und Zinkenstiel 3 ermöglichen und begrenzen.

Figuren 21 und 22 zeigen die Verwendung eines Fangelements 90 als Rückprallsicherungsanordnung 6. Dieses Fangelement 90 umgreift als Öse oder Ring den Zinkenstiel 3. Das Fangelement 90 ist fest am unteren Zusatzfederende 52 angeordnet. Im Ruhezustand ist der Zinkenstiel 3 von dem Fangelement 90 beabstandet, sodass einerseits einer Relativbewegung zwischen Zusatzfeder 5 und Fangelement 3 möglich ist, aber durch das Fangelement 90 auch begrenzt ist.

Figuren 21 und 22 zeigen eine Wölbung 91. Diese Wölbung 91 kann unabhängig von der konkreten Ausgestaltung der Rückprallsicherungsanordnung 6 verwendet werden. Die Wölbung 91 befindet sich weiter unten, also näher dem Boden zugeordnet, als die Rückprallsicherungsanordnung 6. Die Wölbung 91 ist an der konkaven Seite des unteren Bogens 34 ausgebildet und ist derart geformt und positioniert, um aufsteigenden Gutsstrom an der Rückprallsicherungsanordnung 6 vorbeizuleiten.

Die Rückprallsicherungsanordnung 6 in Form der Bolzenanordnung 61, der Klammer 70, der plastischen Ausformungen 80 oder des Fangelements 90 kann sich am oberen Bogen 33, am unteren Bogen 34 oder am Übergang 35 befinden.

Die Wölbung 91 kann insbesondere in Verbindung mit der Bolzenanordnung 61, der Klammer 70, der plastischen Ausformungen 80 oder dem Fangelement 90 verwendet werden.

Figur 23 zeigt beispielhaft die Zinkenanordnung 1 aus Figuren 21 und 22 an einem Ausschnitt eines Rahmens 201 des Bodenbearbeitungsgerätes 200. Alternativ kann an dem Rahmen 201 auch jede andere hier vorgestellte Zinkenanordnung 1 befestigt werden.

### Bezugszeichenliste

- 1: Zinkenanordnung
- 2: Zugrichtung
- 3: Zinkenstiel
- 31: oberes Zinkenstielende
- 32: unteres Zinkenstielende
- 33: oberer Bogen
- 34: unterer Bogen
- 35: Übergang
- 4: Schar
- 41: Scharverschraubung
- 5: Zusatzfeder
- 51: oberes Zusatzfederende
- 52: unteres Zusatzfederende
- 6: Rückprallsicherungsanordnung
- 61: Bolzenanordnung
- 62: Bolzen
- 63: Hülse
- 64: Mutter
- 65: Scheibe
- 70: Klammer
- 71: Klammerbasis
- 72: Klammerschenkel
- 73: Klammerfortsätze
- 74: Aussparungen
- 80: plastische Ausformungen
- 81: Ausformungsschenkel
- 82: Ausformungsfortsatz
- 90: Fangelement
- 91: Wölbung
- 100: Vertikalelement
- 101: Horizontalabschnitt
- 102: plastisch verformter Bereich des Zinkenstiels
- 200: Bodenbearbeitungsgerät
- 201: Rahmen
- 202: Befestigungsanordnung

## Patentansprüche

1. Zinkenanordnung (1) eines Bodenbearbeitungsgerätes (200), umfassend:
- einen Zinkenstiel (3), ausgebildet als gebogene Blattfeder, wobei ein oberes Zinkenstielende (31) zur Befestigung an einem Rahmen (201) des Bodenbearbeitungsgerätes (200) ausgebildet ist,
- ein Schar (4) an einem unteren Zinkenstielende (32), wobei das Schar (4) durch den Boden in einer Zugrichtung (2) ziehbar ist,
- wobei der Zinkenstiel (3) einen S-förmigen Abschnitt aufweist, der einen oberen Bogen (33) und einen unteren Bogen (34) bildet, wobei die konvexe Seite des oberen Bogens (33) und die konkave Seite des unteren Bogens (34) in Zugrichtung (2) zeigen,
- eine Zusatzfeder (5), ausgebildet als gebogene Blattfeder, wobei sich die Zusatzfeder (5) von einem oberen Zusatzfederende (51) bis zu einem unteren Zusatzfederende (52) erstreckt und an der konkaven Seite des oberen Bogens (33) parallel zumindest zu einem Abschnitt des oberen Bogens (33) verläuft,
- wobei die Zusatzfeder (5), insbesondere das untere Zusatzfederende (51), über eine Rückprallsicherungsanordnung (6) mit dem Zinkenstiel (3) gekoppelt ist.

2. Zinkenanordnung (1) nach Anspruch 1, wobei die Rückprallsicherungsanordnung (6) dazu ausgebildet ist, eine Bewegung des Zinkenstiels (3) relativ zur Zusatzfeder (5) im begrenzten Umfang zu ermöglichen.

3. Zinkenanordnung (1) nach einem der vorhergehenden Ansprüche, wobei die Rückprallsicherungsanordnung (6) ein festes Element umfasst, das fest am Zinkenstiel (3) angeordnet ist und auf der Rückseite des Zinkenstiels (3) an der Zusatzfeder (5) angeordnet und relativ zur Zusatzfeder (3) im begrenzten Umfang beweglich ist.

4. Zinkenanordnung (1) nach einem der vorhergehenden Ansprüche, wobei die Rückprallsicherungsanordnung (6) eine Bolzenanordnung (61) umfasst, die sich durch den Zinkenstiel (3) und durch die Zusatzfeder (5) erstreckt; vorzugsweise mit einem Bolzen (62) als festes Element der Rückprallsicherungsanordnung (6).

5. Zinkenanordnung (1) nach einem der Ansprüche 1 bis 3, wobei die Zusatzfeder (5) zum unteren Zusatzfederende (51) hin mit einem Horizontalabschnitt (101) nicht parallel zum Zinkenstiel (3) verläuft, wobei die Rückprallsicherungsanordnung (6) ein Vertikalelement (100) umfasst, dessen Oberseite mit dem unteren Zusatzfederende (51) verbunden ist und dessen Unterseite an der konvexen Seite des unteren Bogens (34) mit dem Zinkenstiel (3) verbunden ist; vorzugsweise wobei das Vertikalelement (100) das feste Element der Rückprallsicherungsanordnung (6) bildet.

6. Zinkenanordnung (1) nach Anspruch 5,
- wobei das Vertikalelement (100) mit dem Zinkenstiel (3) verschraubt ist; vorzugsweise mittels einer Scharverschraubung (41), über die auch das Schar (4) mit dem Zinkenstiel (3) verschraubt ist,
- oder wobei das Vertikalelement (100) an einem plastisch verformten Bereich des Zinkenstiels (3) kraftschlüssig und/oder formschlüssig mit dem Zinkenstiel (3) verbunden ist, wobei die Verbindung insbesondere durch die plastische Verformung gebildet ist.

7. Zinkenanordnung (1) nach einem der Ansprüche 1 bis 3, wobei die Rückprallsicherungsanordnung (6) eine Klammer (70) umfasst, die den Zinkenstiel (3) und die Zusatzfeder (5) verbindet; vorzugsweise wobei die Klammer (70) das feste Element der Rückprallsicherungsanordnung (6) bildet.

8. Zinkenanordnung (1) nach einem der Ansprüche 1 bis 3, wobei die Rückprallsicherungsanordnung (6) zumindest eine plastische Ausformung (80) aus dem Material des Zinkenstiels (3) umfasst, wobei die plastische Ausformung (80) die Zusatzfeder (5) hintergreift; vorzugsweise wobei die die plastische Ausformung (80) das feste Element der Rückprallsicherungsanordnung (6) bildet.

9. Zinkenanordnung (1) nach einem der Ansprüche 1 oder 2, wobei die Rückprallsicherungsanordnung (6) ein Fangelement (90) an der Zusatzfeder (5), insbesondere am unteren Zusatzfederende (52), umfasst, wobei das Fangelement (90) den Zinkenstil (3) zumindest teilweise umgreift.

10. Zinkenanordnung (1) nach einem der vorhergehenden Ansprüche, wobei der untere Bogen (34) des Zinkenstiels (3) eine in Zugrichtung (2) hervorstehende Wölbung (91) aufweist und die Rückprallsicherungsanordnung (6) höher angeordnet ist als die Wölbung (91); insbesondere wobei die Wölbung (91) ausgebildet und angeordnet ist, einen Gutsstrom aus Boden- und/oder Pflanzenmaterial an der Rückprallsicherungsanordnung (6) vorbeizuleiten.

11. Bodenbearbeitungsgerät (200) mit
- einem Rahmen (201),
- mehreren am Rahmen (201) befestigten Zinkenanordnungen (1) nach einem der vorhergehenden Ansprüche,
- und einer Zugvorrichtung (2) zur Befestigung des Rahmens (201) an einer Zugmaschine.
